# EUROPEAN PATENT APPLICATION

(11) **EP 3 964 823 A1**
(43) Date of publication of application: **09.03.2022**
(21) Application number: 20194112.7
(22) Date of filing: 02.09.2020
(51) Int. Cl.: G01N 23/16

(54) **A DEVICE FOR TESTING A FLAT PLATE-SHAPED MATERIAL**

(71) Applicant: FORCE Technology, 2605 Brøndby (DK)
(72) Inventor: OLESEN, Finn Falentin, 2605 Brøndby (DK); JENSEN, Torben Haugaard, 2605 Brøndby (DK); SLETSGAARD, Jan, 2605 Brøndby (DK)
(74) Representative: AWA Denmark A/S

(57) **Abstract**

A device (1) adapted for examining and detecting foreign objects (3) in a flat plate-shaped material (2) and comprising a transport device (4) for transporting a flat plate-shaped material (2) to be examined through the device (1) in a transport direction (T), a first X-ray source (5) and a second X-ray source (6) adapted for, in operation, emitting a first X-ray beam (9) and a second X-ray beam (10), a first sensor unit (7) and a second sensor unit (8) arranged to detect the first and second X-ray beam (9, 10), the first and second X-ray source (5, 6) being arranged spaced apart in the transport direction (T) and such that the direction of propagation of the first and second X-ray beam (9, 10) are tilted towards each other forming an angle β of at least 5 degrees with one another, the first and second sensor unit (7, 8) being adapted for detecting data indicative of the presence and the indirect or direct position in the transport direction (T) of a foreign object (3) in a flat plate-shaped material (2), and the first and second sensor unit (7, 8) comprise or are connected to a data processing unit (21) adapted for processing the detected data to determine the presence of a foreign object (3) in the flat plate-shaped material (2), and to provide a measure of the vertical position of the foreign object (3) in the flat plate-shaped material (2) and a measure of a horizontal position of the foreign object (3) in the flat plate-shaped material (2).

## Description

### Technical Field

The present invention relates to a device and a method for examining and detecting foreign objects in a flat plate-shaped material.

As used herein, the term "flat plate-shaped materials" is intended to encompass all feasible such materials, but in particular flat fiber-based materials being understood as materials based on fiber wools, such as mineral wool and glass wool, wood wools, such as composite wood, chip board, fiberboard, medium density fiberboard (MDF), oriented strand board (OSB), cotton wools, such as diapers, and like materials, as well as flat non-fiber-based materials, e.g. composite wood, mastic, gypsum board, foam-based materials and plastic-based materials.

As used herein, the term "foreign object" is intended to encompass in principle any object not supposed to form part of a given flat plate-shaped material. Most often such a foreign object is an agglomeration of a component of the flat plate-shaped material, e.g. a binding material. However, a foreign object may also be for instance a misplaced tool, a screw or a nail, or another object inadvertently dropped into or finding its way into the flat plate-shaped material. A foreign object may also be an object included by design, and being different from the rest of material, such as a chip, a bolt, a wire or reinforcement of some kind. Finally, a foreign object may also be a void, for instance air or gas incapsulated in the flat plate-shaped material.

### Background Art

Flat, fiber-based materials are typically produced in a production facility using a suitable wool as the raw material, adding a binding agent and subsequently compressing the mix to form the flat, fiber-based material. When compressing the material, a considerable pressure is applied in one or more stages to achieve the end product. Standard production facilities for producing such materials typically produce the flat, fiber-based material at a rate of meters of material per second, such as between 0.2 and 2 meters per second. The production facilities used for producing flat, fiber-based materials are typically very expensive and are in operation round the clock.

Detection of foreign objects in a flat plate-shaped material is desirable for several reasons. One reason is that a foreign object may cause considerable damage to the production facility, and especially the compression stage thereof, forcing the production facility to be shut down for maintenance. This may be a very costly procedure. Another reason is that foreign object present in the end product may cause quality issues. For instance, a foreign object present near a surface of the end product may be visible when the end product has been used e.g. in a building, and the visibility of the foreign object may even be increased once the end product has been painted. Also, foreign objects affect the homogeneity of the flat plate-shaped material, which is also a quality parameter for the end product.

US 6,885,198 B discloses a device for testing a mat moved in one direction and made of biomass particles for manufacturing boards. On one side of the mat, radiation sources are positioned with a transversely spaced-apart relationship transverse to the direction of motion. On the other side of the mat, a line of detector elements is arranged beneath each of the radiation sources, a fan-shaped beam impinging on said detector elements. The beam passes either only through one standard body or only through the mat or through neither the standard body nor the mat and is received by the detector elements and converted into electrical output signals. The output signals are transferred via lines to an evaluating circuit that controls when needed a device for removing mat portions which contain unwanted, over-dense foreign matter or the weight per unit area of which is too low. EP 1 997 944 A1 discloses a similar device, which only comprises one radiation source and one detector. For both these prior art devices, the sources of radiation are arranged radiating in a direction perpendicular to the mat to be examined.

However, none of these devices provide any depth information. Even if it is possible to determine the presence of a foreign object, it is therefore not possible to determine its location in the mat examined.

US 2,838,860 A, which was filed as far back as in 1953, discloses a method and an apparatus for determining the presence and location of foreign objects in a flat plate-shaped material by means of energy-rich X-rays. The device comprises two X-ray sources arranged such that their X-ray beams intersect. The method comprises placing an X-ray sensitive film on a surface of a material to be examined opposite to the X-ray sources and to arrange material to be examined in the point of intersection of the X-ray beams such as to achieve information regarding the vertical position of the foreign object in the flat plate-shaped material.

However, this solution has several disadvantages, including the following. Energy-rich X-ray sources are very expensive. X-ray sensitive films are likewise expensive and are also cumbersome and very time consuming to handle and to extract information from. Furthermore, the device according to US 2,838,860 A implies that the material to be examined is stationary in the device. Therefore, the device cannot readily be integrated in a production line or be used for scanning type measurements. Also, when attempting to achieve a vertical position of the foreign object in the flat plate-shaped material, the setup of this solution implies a risk of shading for oneself, and thus of providing insufficient or erroneous data. Particularly, referring to Fig. 1 of US 2,838,860 A, the distance of displacement at a given position in the vertical direction (z) between the two images captured will vary with the distance to the center line of the images. The same applies to a given position in the horizontal direction (y). Since the (x, y) position of a detected foreign object is unknown a correction is not possible and the result of the determination of the vertical position becomes inaccurate.

Consequently, there is a need and desire to provide an improved device adapted for examining and detecting foreign objects in a flat plate-shaped material with which the location of the foreign object in the flat plate-shaped material, as well as other relevant and related parameters, may be determined in an accurate, simple and straight forward manner.

Furthermore, since exposure to X-radiation is generally undesired for health reasons, and since high energy X-ray sources are expensive, there is a desire to provide an improved device adapted for examining and detecting foreign objects in a flat plate-shaped material with which the said parameters may be obtained using a low energy X-ray source such as to avoid excess radiation.

### Summary of Invention

It is therefore the object of the invention to provide an improved device adapted for examining and detecting foreign objects in a flat plate-shaped material with which the location of the foreign object, in particular also the vertical location, in the flat plate-shaped material, as well as other relevant and related parameters, may be determined in an accurate, simple and straight forward manner.

It is a further object of the invention to provide such a device with which an improved quality control of flat plate-shaped materials and an improved production facility protection become possible.

It is a further object of the invention to provide such a device which may readily and easily be integrated in a production line or facility.

It is a still further object of the invention to provide such a device with which the said parameters may be obtained using a low energy X-ray source such as to avoid excess radiation.

These and other objects are achieved by means of a device adapted for examining and detecting foreign objects in a flat plate-shaped material, such as a material of the types defined above, the device comprising a transport device adapted for transporting a flat plate-shaped material to be examined through the device in a transport direction, a first X-ray source adapted for, in operation, emitting a first X-ray beam, and a second X-ray source adapted for, in operation, emitting a second X-ray beam, the first X-ray source and the second X-ray source being arranged on a first side of the transport device, a first sensor unit arranged to detect the first X-ray beam and a second sensor unit arranged to detect the second X-ray beam, the first sensor unit and the second sensor unit being arranged on a second side of the transport device opposite to the first side of the transport device seen in a vertical direction, where the first X-ray source and the second X-ray source are arranged spaced apart in the transport direction and are arranged such that the direction of propagation of the first X-ray beam and the direction of propagation of the second X-ray beam are tilted towards each other forming an angle β of at least 5 degrees with one another, where the first sensor unit is adapted for detecting first data, and the second sensor unit is adapted for detecting second data, the first data and the second data each being indicative of the presence of a foreign object in a flat plate-shaped material and of a direct or an indirect position in the transport direction of a foreign object in the flat plate-shaped material, and where the device further comprises a data processing unit adapted for receiving detected first data and second data from the first sensor unit and the second sensor unit, processing the received first data and second data to determine the presence of a foreign object in the flat plate-shaped material, and, if presence of a foreign object in the flat plate-shaped material is determined, processing the received first data and second data to provide at least a measure of the vertical position of the foreign object in the flat plate-shaped material and a measure of the horizontal position of the foreign object in the flat plate-shaped material.

Thereby, and in particular by providing that the first X-ray source and the second X-ray source are arranged spaced apart in the transport direction and are arranged such that the direction of propagation of the first X-ray beam and the direction of propagation of the second X-ray beam are tilted towards each other forming an angle β of at least 5 degrees with one another, and further by providing that the first data and the second data each is indicative of the presence of a foreign object in a flat plate-shaped material and of a direct or an indirect position in the transport direction of a foreign object in the flat plate-shaped material, it is made possible to determine both the vertical location and the horizontal position of the foreign object in the flat plate-shaped material, as well as other relevant and related parameters, in an accurate, simple and straight forward manner.

Particularly, by thus making it possible to provide both a measure of the vertical position of the foreign object in the flat plate-shaped material and a measure of a horizontal position of the foreign object in the flat plate-shaped material, a device is provided with which the position of the foreign object may be accurately determined such as to enable effective and accurate localization, which can be used to evaluate whether the foreign object should be removed. Thereby, an improved quality control of flat plate-shaped materials and an improved production facility protection becomes possible.

By further providing that the device comprises a transport device adapted for transporting a flat plate-shaped material to be examined through the device in a transport direction, and further by providing that the first X-ray source and the second X-ray source are arranged spaced apart in the transport direction, it is enabled that the device may readily and easily be integrated in a production line or facility.

By further providing a data processing unit adapted for processing the detected data to determine the presence of a foreign object in the flat plate-shaped material, and, if the presence of a foreign object in the flat plate-shaped material is determined, processing the detected data to provide a measure of the vertical position of the foreign object in the flat plate-shaped material and a measure of a horizontal position of the foreign object in the flat plate-shaped material, it is made possible to determine the location of the foreign object in the flat plate-shaped material, as well as other relevant and related parameters, in an accurate, simple and straight forward manner.

The angle, β, may be adjustable, for instance by arranging the X-ray sources in such a manner that the direction of propagation of the respective X-ray beams may be adjusted with respect to each other.

In an embodiment, processing the received first data and second data to provide a measure of the vertical position of the foreign object in the flat plate-shaped material comprises providing the vertical position of a reference parameter for the foreign object, the reference parameter being chosen from the group comprising at least the center of mass of the foreign object, an upper surface of the foreign object and a lower surface of the foreign object.

Thereby, the vertical position of a foreign object detected may be determined in a particularly simple manner.

In an embodiment, the device is adapted for allowing the direction of propagation of the first X-ray beam and the direction of propagation of the second X-ray beam to be displaced backwards and forwards in the transport direction.

Thereby, scanning and examination of a larger area is provided for in a particularly simple manner.

In an embodiment, the first sensor unit and the second sensor unit is a digital sensor unit, such as a CCD sensor unit or a MOS sensor unit or a CMOS sensor unit or a direct detection unit such as a semiconductor sensor, e.g. a CdTe/CZT sensor type.

Thereby, especially fast and efficient data collection is provided for.

In an embodiment, the first sensor unit and the second sensor unit are adapted for providing measurements with a detection integration and measurement period in the millisecond range.

This has the advantage of enabling in-line measurements and examination in a production line in which the flat plate-shaped material typically travels with a speed of in the order of 2 meters per second.

In an embodiment, the first sensor unit and the second sensor unit are adapted for providing measurements with a measurement resolution equal to or higher than RP x RT, where RP is the pixel resolution of the detector and RT is determined substantially by the measurement time and the production speed of the flat plate shaped material, particularly where RP and RT is in the range of tenth of mm to several mm.

The foreign object, which it is desired to be able to detect and localize, may have a diameter of as little as 1 cm or potentially even less. Providing such a measurement resolution provides for easy and secure detection of foreign objects of such small sizes.

In an embodiment, the first sensor unit and the second sensor unit are further adapted for detecting data indicative of at least one of a weight, such as a grammage or basis weight, of a flat plate-shaped material and a homogeneity of the flat plate-shaped material, and the data processing unit is furthermore adapted for processing the detected data to provide a measure of the weight, such as a grammage or basis weight, of the flat plate-shaped material and/or the homogeneity of the flat plate-shaped material.

By determining a measure of the weight, such as a grammage or basis weight, of the flat plate-shaped material and/or the homogeneity of the flat plate-shaped material, an improved quality control of flat plate-shaped materials becomes possible.

In an embodiment, the device is adapted for integration into a production line. Integration into a production line may for instance be achieved by providing a framework which enables mounting the device in an existing production line or coupling the device together with an existing production line.

Thereby, in-line quality control and production facility protection is enabled, which increases the efficiency and improves the protection of the production facility considerably.

In an embodiment, the data processing unit is furthermore adapted for issuing a signal indicating one or more of:
- the presence of a foreign object in the flat plate-shaped material,
- the horizontal position of the foreign object in the flat plate-shaped material,
- the vertical position of the foreign object in the flat plate-shaped material,
- the center of mass of the foreign object in the flat plate-shaped material,
- the edges of the foreign object in the flat plate-shaped material,
- the weight, such as the grammage or basis weight, of the flat plate-shaped material, and
- the homogeneity of the flat plate-shaped material.

Thereby, the data extracted from the measurements of the sensor units may be provided to other units for further handling. This in turn provides for an improved production facility protection as well as an improved quality control of flat plate-shaped materials.

In an embodiment, the data processing unit is further adapted for providing said signal to any one or more of a display, an emergency stop and a device for removing the foreign object.

Thereby, the data extracted from the measurements may be presented to an operator or a user for further actions to be taken, or it may be used to actuate a device for marking the foreign object, or it may be used to actuate a device for removing the foreign object or for invoking an emergency stop of the production facility. This in turn provides for an improved production facility protection as well as an improved quality control of flat plate-shaped materials and may furthermore reduce downtime and increase the efficiency of the production facility.

In an embodiment, the device comprises an array of detectors arranged on a line extending in a direction extending in an angle of between 45 and 90 degrees to the transport direction, T, and the first X-ray source and the second X-ray source are displaceable in the direction extending in an angle of between 45 and 90 degrees to the transport direction, T.

Alternatively, the device comprises an array of detectors arranged on a line extending in a direction extending in an angle of between 45 and 90 degrees to the transport direction, T, and the device comprises an array of X-ray sources arranged on a line extending in a direction extending in an angle of between 45 and 90 degrees to the transport direction, T.

Thereby, measurements and data capture may be performed over the entire width of the flat, fiber-based material. This provides for a further improvement of the above-described advantages.

The device may further comprise a collimator for collimating the first X-ray beam and the second X-ray beam.

Thereby, more well-defined X-ray beams are achieved, which in turn provides for more accurate measurement data and thus more accurate results.

The collimators also ensure that X-ray beams from one source will only be received by the appropriate sensor unit or array without exposing the other sensor unit or array. Use of ray shielding and collimator ensures that only material within the examination plane defined by a source and the corresponding sensor unit or array will influence sensor readings.

The device may be adapted for examining and detecting foreign objects in a flat plate-shaped material being a mineral wool, glass wool, MDF, OSB or chip board.

In a second aspect of the invention, the above and other objects are achieved by means of a method for examining and detecting foreign objects in a flat plate-shaped material of the types described above the method comprising the steps of:
providing a device according to the first aspect of the invention, and
using the first sensor unit, detecting first data indicative of the presence of a foreign object in a flat plate-shaped material and of an indirect or a direct position in the transport direction (T) of a foreign object in the flat plate-shaped material,
using the second sensor unit, detecting second data indicative of the presence of a foreign object in a flat plate-shaped material and of an indirect or a direct position in the transport direction (T) of a foreign object in the flat plate-shaped material, and
by means of the data processing unit:
   receiving detected first data and second data from the first sensor unit and the second sensor unit,
   processing the received first data and second data to determine the presence of a foreign object in the flat plate-shaped material, and
   if the presence of a foreign object in the flat plate-shaped material is determined positively, processing the received first data and second data to provide at least a measure of the vertical position of the foreign object in the flat plate-shaped material and a measure of a horizontal position of the foreign object in the flat plate-shaped material.

In an embodiment, the step of processing the received first data and second data to provide a measure of the vertical position of the foreign object in the flat plate-shaped material comprises providing the vertical position of a reference parameter for the foreign object, the reference parameter being chosen from the group comprising at least the center of mass of the foreign object, an upper surface of the foreign object and a lower surface of the foreign object.

In an embodiment, the received first data and second data represents a first measurement plane and a second measurement plane, respectively, and wherein the steps of processing the received first data and second data to determine the presence of a foreign object in the flat plate-shaped material and of processing the received first data and second data to provide a measure of the vertical position of the foreign object in the flat plate-shaped material comprises:
analyzing the received first data and the second data, respectively, to identify first and second measurement data, respectively, indicating a radiation intensity below a pre-determined threshold,
determining such identified first and second measurement data, respectively, as indicating the presence of a foreign object in the flat plate-shaped material,
pairing such identified first and second measurement data, respectively, overlapping in a horizontal direction within a maximal distance between the first data and the second data in the transport direction (T),
projecting the paired measurement data in a direction of the first measurement plane and the second measurement plane, respectively, such as to provide a 3D-repesentation of the foreign object,
determining the center of mass of the 3D-repesentation of the foreign object, and
determining the vertical position of the foreign object as the vertical position of the determined center of mass.

In an embodiment, the method comprises the further steps of using the first sensor unit and the second sensor unit, detecting data indicative of at least one of a weight, such as a grammage or basis weight, of a flat plate-shaped material and a homogeneity of the flat plate-shaped material, and using the data processing unit, processing the detected data to provide a measure of the weight, such as a grammage or basis weight, of the flat plate-shaped material and/or the homogeneity of the flat plate-shaped material.

In an embodiment, the method comprises the further steps of, using the data processing unit, issuing a signal indicating one or more of:
- the presence of a foreign object in the flat plate-shaped material,
- the horizontal position of the foreign object in the flat plate-shaped material,
- the vertical position of the foreign object in the flat plate-shaped material,
- the center of mass of the foreign object in the flat plate-shaped material,
- the edges of the foreign object in the flat plate-shaped material,
- the weight, such as the grammage or basis weight, of the flat plate-shaped material, and
- the homogeneity of the flat plate-shaped material.

In an embodiment, the method comprises the further steps of, using the data processing unit, providing said signal to any one or more of a display and a device for removing the foreign object.

In an embodiment, the method comprises one or more of the further steps of:
- displacing the direction of propagation of the first X-ray beam and the direction of propagation of the second X-ray beam backwards and forwards in the transport direction,
- using the first sensor unit and the second sensor unit, detecting data in real time,
- using the first sensor unit and the second sensor unit, providing measurements with a detection integration and sample period in the millisecond range, and
- using the first sensor unit and the second sensor unit, providing measurements with a measurement resolution equal to higher than RP x RT, where RP is the pixel resolution of the detector and RT is determined substantially by the measurement time and the production speed of the flat plate shaped material, particularly where RP and RT are in the range of tenth of mm to several mm.

In a third aspect the above and other objects are achieved by means of a production facility configured for producing a flat plate-shaped material of the types described above the production facility comprising a device according to the first aspect of the invention.

### Brief Description of Drawings

In the following description embodiments of the invention will be described with reference to the schematic drawings, in which
Fig. 1 shows a perspective view of a device according to the invention.
Figs. 2 and 3 show cross-sectional views of the device according to Fig. 1.

### Description of Embodiments

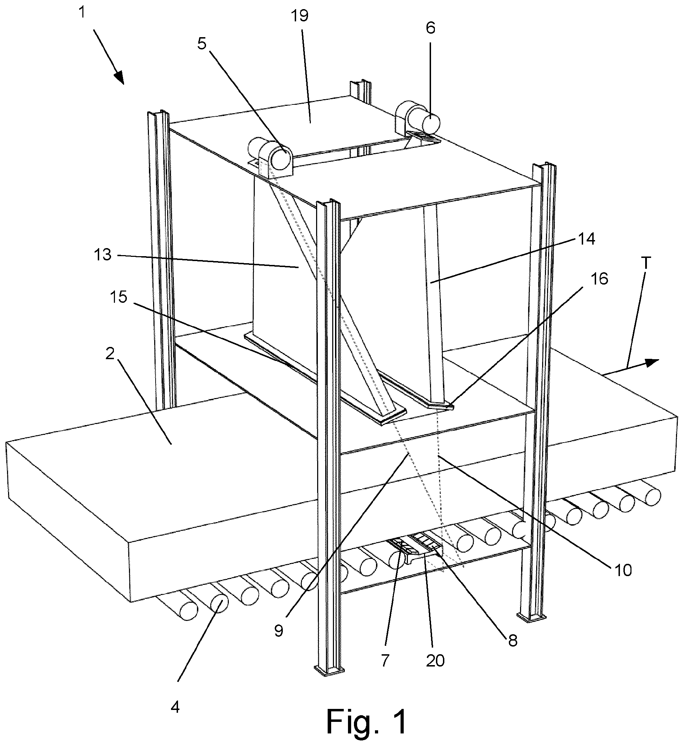

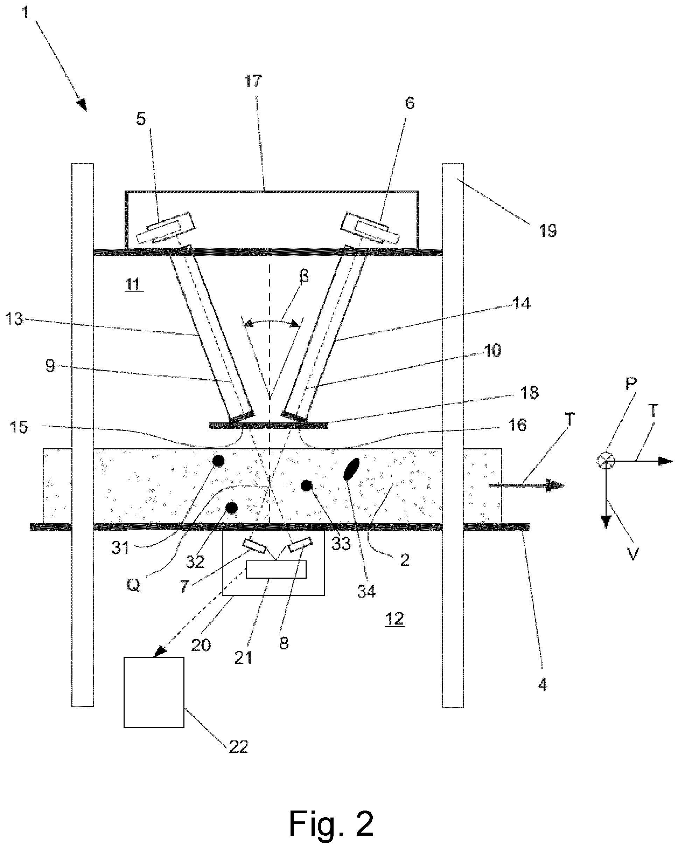

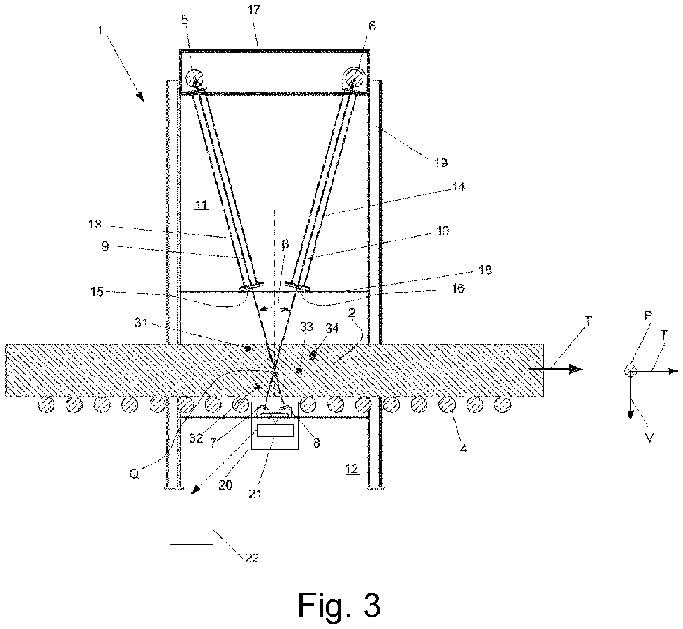

Fig. 1 shows a perspective view of a device 1 adapted for examining a flat piece of fiber-based material 2 with the aim of detecting foreign objects 31 present in the flat piece of fiber-based material 2. Figs. 2 and 3 show cross sectional views of the device 1 according to Fig. 1.

Fiber-based materials 2 may encompass a wide variety of materials including, but not limited to, fiber wool, mineral wool and glass wool as well as composite wood, chip board, fiberboard, medium density fiberboard (MDF), oriented strand board (OSB) and the like. Such materials are typically produced in a production facility using a suitable wool as the raw material, adding a binding agent and subsequently compressing the mix to form the flat, fiber-based material 2. Standard production facilities for producing such materials 2 typically produce at least two meters of material per second. The thickness of the flat, fiber-based material 2 may be in the range of 5 mm to 1 m.

The device 1 is configured for integration into a production line for producing flat pieces of fiber-based material 2. The device 1 may also be configured as a stand-alone device.

Generally, the device 1 according to the invention comprises a transport device 4, at least two X-ray sources 5, 6 and at least two sensor units 7 and 8.

The transport device 4 is adapted for transporting a flat plate-shaped material 2 to be examined through the device 1 in a transport direction T. The transport device 4 is typically a band conveyor or conveyor belt. The transport device 4 may also be rollers or a low friction surface suitable for enabling moving the flat plate-shaped material 2 through the device 1. The flat plate-shaped material 2 comprises a longitudinal direction extending in the transport direction T, a width direction extending in a direction P extending in the same plane as but perpendicular to the transport direction T, and a depth direction extending vertically and in a direction V perpendicular to both the transport direction T and the direction P.

The device 1 comprises a first X-ray source 5 adapted for, in operation, emitting a first X-ray beam 9, and a second X-ray source 6 adapted for, in operation, emitting a second X-ray beam 10. Generally, X-rays or X-radiation has a wavelength in the range of 0.1 pm to 10 nm and frequencies in the range of 2x10¹⁵ Hz to 3x10²¹ Hz, or energies in the range of 5 keV to 5 MeV, such as 10-150 keV. The X-ray sources 5 and 6 are punctiform sources. The X-ray sources 5 and 6 may further be arranged in an X-ray source unit 17, such as a suitable box or encapsulation, ensuring suitable directional emission of the X-ray beams 9 and 10. The device 1 may further comprise beam encapsulation or shielding units 13 and 14 ensuring that the X-ray beams 9 and 10 are shielded towards the surroundings and ensuring suitable directional control of the X-ray beams 9 and 10.

The device 1 may furthermore comprise collimators 15, 16 arranged to collimate the first and second X-ray beam 9, 10. The collimators 15, 16 ensure that the first and second X-ray beam 9, 10 are provided in the shape of a plane fan and are well-defined and homogenous. The collimators 15, 16 are typically provided as narrow slits in a suitable material. The collimators 15, 16 may form a single collimator unit 18, such as a single piece of material provided with two slits. The collimators 15, 16 also ensure that X-ray beams from one source will only be received by the appropriate sensor unit or array without exposing the other sensor unit or array. Use of ray shielding and collimator ensures that only material within the examination plane defined by a source and the corresponding sensor unit or array will influence sensor readings.

The first X-ray source 5 and the second X-ray source 6 are arranged such that the X-ray beams 9 and 10 are emitted towards and penetrate through a material 2 arranged in or passing through the device 1. The first X-ray source 5 and the second X-ray source 6 are arranged in a first part 11 of the device, typically being an upper part of the device 1. In other words, the first X-ray source 5 and the second X-ray source 6 are arranged on a first side of the transport device 4. The first X-ray source 5 and the second X-ray source 6 are arranged spaced apart in the transport direction T. The first X-ray source 5 and the second X-ray source 6 are arranged such that the direction of propagation of the first X-ray beam 9 and the direction of propagation of the second X-ray beam 10 are tilted towards each other forming an angle β of at least 10 degrees with one another. On the figures, the direction of propagation of the first X-ray beam 9 and the direction of propagation of the second X-ray beam 10 extend from the respective X-ray source 5 and 6 towards the respective sensor unit 7 and 8 in a direction parallel with the respective lines marking the first and second X-ray beam 9 and 10. The X-ray sources 5 and 6 may be adjustable in such a manner that the angle β may be adjusted. The angle β may be in the range of 5 degrees to 90 degrees, 10 degrees to 80 degrees or 10 degrees to 40 degrees, such as 10, 20 or 30 degrees. The angle β may furthermore be adjustable.

The X-ray sources 5 and 6 are further arranged in a suitable distance from the material 2 to be detected taking into account the fact that the intensity of the X-ray beams 9, 10 decrease with the squared distance, and that stronger X-ray sources 5, 6 demand more extensive safety measures. In particular, the generally applicable safety standards demand that the stronger the X-ray source 5, 6 used, the thicker, heavier and more expensive shielding of the radiation is necessary, and the higher the requirements for education of personnel and vigilance.

The first sensor unit 7 is arranged to detect the first X-ray beam 9 after it has penetrated the material 2. The second sensor unit 8 is arranged to detect the second X-ray beam 10 after it has penetrated the material 2. The first sensor unit 7 and the second sensor unit 8 are therefore arranged in a second part 12 of the device 1 opposite to the first part 11 of the device 1. Put in other words, the first sensor unit 7 and the second sensor unit 8 are arranged on a second side of the transport device 4 opposite to the first side of the transport device 4. The first sensor unit 7 is thus arranged to detect first data comprising at least data regarding the intensity of the X-rays detected by the first sensor unit 7, and the second sensor unit 8 is arranged to detect second data comprising at least data regarding the intensity of the X-rays detected by the second sensor unit 8. It is noted that in some embodiments a third X-ray source and a third sensor unit and/or a further X-ray source and a further sensor unit may be provided in an analogous manner.

As is shown in Fig. 1, the device 1 according to the invention may comprise an array of sensor units 7, 8 arranged on a line extending in a direction P perpendicular to the transport direction T, and at least two X-ray sources 5, 6 being movable in a scanning movement in the direction P. Thereby, the entire width of a material 2 arranged in or passing through the device 1 may be examined.

Alternatively, a device 1 according to the invention may comprise either an array of X-ray sources 5, 6 arranged on a line extending in a direction P perpendicular to the transport direction T and at least two sensor units 7, 8 being movable in a scanning movement in the direction P. In yet another alternative, a device 1 may comprise an array of X-ray sources 5, 6 and an array of sensor units 7, 8 arranged on a line extending in a direction P perpendicular to the transport direction T. Thereby, the entire width of a material 2 arranged in or passing through the device 1 may be examined.

In any event, the at least two sensor units 7, 8 are adapted for detecting data indicative of the presence of a foreign object in a flat plate-shaped material, and data indicative of the vertical position of the foreign object in a flat plate-shaped material. The at least two sensor units 7, 8 are preferably capable of detecting signals with a detection integration and sample period being in the order of milliseconds and with a resolution being equal to or higher than RP x RT, where RP is the pixel resolution of the detector and RT is determined substantially by the measurement time and the production speed of the flat plate shaped material, particularly where RP and RT is in the range of tenth of mm to several mm. The at least two sensor units 7, 8 are typically digital detectors configured to convert the captured radiation into an electrical signal. The at least two sensor units 7, 8 may for instance be CCD (charge coupled device) -sensors with a scintillator, MOS (metal-oxide-semiconductor) -sensors or CMOS-sensors and may further be provided as a sensor array 20.

The at least two sensor units 7, 8 are furthermore adapted for processing the detected data or for sending the detected data to a data processing unit 21 for processing. The at least two sensor units 7, 8 may comprise a data processing unit. Alternatively, and as shown on Fig. 2, the at least two sensor units 7, 8 may be connected to a data processing unit 21. In any event the at least two sensor units 7, 8 are configured to convert the captured signal into an electrical signal and to provide the electrical signal to the data processing unit 21 for processing.

In any event, the data detected by the sensor units 7, 8 enables providing information regarding the presence of a foreign object 31, and if deemed present further information regarding the foreign object 31. The further information regarding the foreign object 31 may include a measure of the vertical position or depth of the foreign object 31 in the flat plate-shaped material 2, a measure of the weight or mass distribution in the material 2, such as a weight per square meter, and a determination of the center of mass of the foreign object 31. This further information may be derived from the signals detected in a device 1 according to the invention by calculation. Particularly, the further information may be derived by calculation using the fact that in a device 1 according to the invention a time difference will occur between the detection of a signal corresponding to a foreign object 31 in each of the at least two detectors 7, 8, and that the time difference occurring will be dependent on the vertical position or vertical position of the foreign object 31 provided the material 2 is advanced through the device 1 at a known, constant or variable, speed. If the speed variations are known, a time-position relationship may still be established. The time is an indirect way of establishing the subject position relative to the examination planes and may be replaced by a measure of position from an encoder on the conveyer, using an arbitrary zero. As time and position is measured, the speed is indirectly known over the sample length, typically being in the order of 2 mm

When determining the center of mass of a foreign object 31, it is important to note that the shape of the foreign object 31 are generally very rarely spherical but may rather have any feasible non-regular shape. Therefore, foreign objects 31 will look differently depending on which detector is detecting the foreign object 31. Therefore, further data processing, such as for instance image processing, is needed with the aim of providing an approximate 3D-shape of the relevant section of a flat plate-shaped material 2, and thereby enabling determining the position of the center of mass of the foreign object 31.

The sensor units 7, 8 may further be adapted for issuing a signal indicating the presence and vertical position of a foreign object 31 in the flat plate-shaped material. Alternatively, the device 1 may comprise a unit, such as a display 22 or an alarm, adapted for issuing a signal indicating the presence and vertical position of a foreign object 31. The device 1 may also be adapted for stopping the production facility, e.g. by activating an emergency stop, in case a foreign object 31 is detected or for removing a foreign object 31 detected. Alternatively, a device for removing a foreign object 31 detected, for instance by cutting out the fiber-based material 2 containing the foreign object 31, may be arranged in the production facility downstream of the device 1 according to the invention.

The components of the device 1 may be arranged on a suitable frame structure 19. The frame structure 19 may comprise a part, such as a shelf, for holding the X-ray source unit 17 or X-ray sources 5, 6. The frame structure 19 may comprise a part, such as a shelf, for holding the collimator unit 18 or the collimators 15, 16. The frame structure 19 may comprise a part, such as a shelf, for holding the sensor units 7, 8 or the sensor array 20. The frame structure 19 may comprise a part, such as rods or supports, for holding the device 1 and for positioning the device on a ground or floor. The frame structure 19 may furthermore be configured for connection to or forming a part of a production facility.

### Examples

The data processing unit 21 processes the data to obtain the desired information by performing suitable calculations and image analysis operations. The following are examples intended to explain in general terms how the different desired information regarding the foreign objects 31-34 (Fig. 2) and the flat plate-shaped material 2 is obtained.

### Basis weight

The detected data is an X-ray image or radiograph of the flat plate-shaped material 2. The image is in essence a surface plot of the intensity of the X-rays transmitted through the flat plate-shaped material 2. As the intensity of X-rays transmitted through a material depends on the density of the material, the grammage or basis weight of the flat plate-shaped material may thus be determined directly from the detected data combined with knowledge of the general chemical of the flat plate-shaped material 2. Furthermore, if the structural composition of the flat plate-shaped material 2 is known, the density of the flat plate-shaped material 2 may be determined based on the grammage or basis weight of the flat plate-shaped material 2.

### Presence of a foreign object

The presence of a foreign object 31, 32, 33 or 34 in the flat plate-shaped material 2 may be determined by evaluating the intensity of the X-rays detected by the first and second sensor unit 7 and 8 as a function of horizontal position in the flat plate-shaped material 2. A foreign object 31, 32, 33 or 34 will have a density differing significantly from the remaining flat plate-shaped material 2. Consequently, the intensity of X-rays transmitted through a foreign object 31, 32, 33 or 34 will differ significantly from the intensity of X-rays transmitted through the remaining flat plate-shaped material 2.

Although the intensity of X-rays transmitted through the remaining flat plate-shaped material may vary to some extend in both horizontal directions (T, P), foreign objects may be detected by abrupt changes in the intensity of X-rays transmitted through to the sensor. Thus, a threshold value may be set to a certain increase (voids) or decrease of intensity pr. mm, rather than a specific upper and lower limit of intensity to be exceeded for causing data to be characterized as a foreign object. In the image data captured by the sensor units 7, 8 this may for instance reveal itself as differences in color such that a foreign object 31, 32, 33 or 34 will appear as an area with a color differing from, and typically being darker than, the color of the remaining flat plate-shaped material 2.

### Center of mass of a foreign object

The center of mass of a foreign object 31, 32, 33 or 34 in the flat plate-shaped material 2 may be determined by combining information from the images of the two respective X-ray beams 9, 10 as captured by the sensor units 7, 8. More particularly, the center of mass of a foreign object 31, 32, 33 or 34 in the flat plate-shaped material 2 is calculated like the geometric center, but with each point weighted by the area weight of that point. The geometric center of a plane figure is the arithmetic mean position of all the points in the plane figure. Informally, the geometric center of a foreign object 31, 32, 33 or 34 is the average position of the foreign object 31, 32, 33 or 34 and it is the point at which a cutout of the shape could be perfectly balanced on the tip of a pin. Informally, the center of mass of a foreign object 31, 32, 33 or 34 is the point at which a 3D cutout of the foreign object 31, 32, 33 or 34 could be perfectly balanced on the tip of pin. The weighing could be performed as the total area weight or as the deviation from the expected area weight.

Consider by way of example an oblong foreign object such as the foreign object 34 shown on Fig. 2. The sensor units 7, 8 will capture a two-dimensional image of the oblong foreign object 34 seen from two different angles or points of view. The data processing unit may then determine the center of mass of the foreign object 34 in each of the images captured and combine the two thus obtained centers of mass to provide an estimate of the center of mass of the foreign object 34 in three dimensions. If more than two sensor units are provided and more than two images or data sets of the foreign object 34 are thus captured, more than two obtained centers of mass may be combined, and in consequence a more accurate estimate of the center of mass of the foreign object 34 in three dimensions may be obtained.

### Position of a foreign object

The position, and in particular the vertical location or depth position, of a foreign object, e.g. the foreign object 31 shown on Fig. 2, in the flat plate-shaped material 2 may be determined in several different manners. In the data detected by the sensor units 7, 8, a change is identified in the images from both sensor units 7, 8. This change in signal represents a flaw or foreign object 31 in the inspected material 2.

When determining the vertical position of the foreign object 31, one way to do it is to determine the depth of a feature in the flaw in the images for both detectors. There are several different options for which feature to identify.

A first option is to determine the position of one or more edges of the foreign object 31 in both images. The thus determined positions in the two images can then be used to determine the vertical position of the foreign object 31.

A second option is to determine the geometric center of the foreign object 31 in each of the images. The geometric center of a plane figure is the arithmetic mean position of all the points in the foreign object 31. Informally, it is the average position of the foreign object 31 and it is the point at which a cutout of the shape could be perfectly balanced on the tip of a pin.

A third option is to determine the center of mass of the foreign object 31 in each of the images. The center of mass is calculated like the geometric center, but with each point weighted by the area weight of that point. Informally, it is the point at which a 3D cutout of the foreign object 31 could be perfectly balanced on the tip of pin. The weighing could be performed as the total area weight or as the deviation from the expected area weight.

A fourth option which does not determine the position of a feature in the individual images, but instead to perform a measure of similarity between the images from the two sensor units 7 and 8. This could for example be a cross correlation of the two images. The cross correlation could be performed only on the identified foreign object 31, or on a larger area encompassing the foreign object 31. The shift of the object determined from the similarity measurements is then used to determine the depth of the object.

A fifth option is to use tomographic or semi-tomographic or laminographic or algebraic methods where the signal from the two sensor units 7 and 8 is back-projected onto a reconstruction volume. In this case the foreign object 31 can either be identified in the images and then back-projected, or the full images can be back-projected and the foreign object 31 then identified in the reconstructed volume. Once the foreign object 31 is identified in the reconstructed volume, the positioning of the foreign object 31 is determined in any one of the options described above.

All of the options described above can be applied to the foreign object 31 as a whole. The sensor units 7, 8 are pixelated, and each pixel on the sensor units 7, 8 will generate a line signal. All of the options described above can therefore also be applied line-wise. In the first case the result is one number specifying the vertical position of the foreign object 31. In the second case the result is a list of numbers providing the vertical position of the foreign object 31 at different points along the direction of the detectors.

Several thresholds are used to identify different types of foreign objects 31. The vertical position for each of the foreign object 31 may be determined even though they are overlapping in the original image. This would not be possible using the prior art device of US 2,839,680 A.

When determining the position and shape of a foreign object 31, information from the other image may be used to better determine the position of the foreign object 31 in the first image. Geometric corrections may be applied prior or posterior to determination of the position of a foreign object 31 or depth of a foreign object 31.

If the nature of the foreign object 31 is known a priori, this information can be used to improve the determination of the position of the foreign object 31 in each of the images. This could be the case if the foreign object 31 is not a flaw, but a different density object embedded in the material on purpose, e.g. a chip or a box or bolt fitting.

The two sensor units 7, 8 generate two different images. The position of a foreign object 31 in each of the images can be used to geometrically determine the vertical position of the foreign object 31. The difference in position may be measured in distance or time. The sensor units 7, 8 or sensor system 20 may log the scale of the image in either time or distance.

Without knowing the position difference in distance, the vertical position of a foreign object 31 can be determined only relative, such as above or below or level with a given position, such as e.g. where the X-ray beams 9, 10 intersect. To determine the vertical position of a foreign object 31 in absolute numbers, however, the difference in position must be known in the distance domain.

This can be enabled by taking into account how far the flat, fiber-based material 2 has travelled and by knowing the position and time relation of the foreign bodies.

This can also be enabled by taking into account the angle β between the X-ray beams 9 and 10 and the time difference, Δt, occurring between the foreign object 31 or 34 being hit by the first X-ray beam 9 and the second X-ray beam 10, respectively, and thus between the foreign object 31 being detected by the first sensor unit 7 and the second sensor unit, respectively. Consider the foreign objects 31, 32 and 33 shown in Fig. 2. The foreign object 31 will be detected first by the first X-ray beam 9 and subsequently, with a delay Δt, by the second X-ray beam 10. Therefore, the relative vertical location of the foreign object 31 must be above the point of intersection Q between the X-ray beams 9 and 10. The foreign object 32 will be detected first by the first X-ray beam 9 and the second X-ray beam 10 simultaneously. Therefore, the relative vertical location of the foreign object 31 must be level with the point of intersection Q between the X-ray beams 9 and 10. Finally, the foreign object 33 will be detected first by the second X-ray beam 10 and subsequently, with a delay Δt, by the first X-ray beam 9. Therefore, the relative vertical location of the foreign object 31 must be below the point of intersection Q between the X-ray beams 9 and 10. Using the angle β between the X-ray beams 9 and 10, the distance between the X-ray beams 9 and 10 at a given height may be calculated, and then the exact vertical location of the foreign objects 31, 32 and 33 may be calculated.

The person skilled in the art realizes that the present invention by no means is limited to the preferred embodiments described above. On the contrary, many modifications and variations are possible within the scope of the appended claims.

### List of reference numerals

- 1: Device
- 2: Material
31-34 Foreign object
4 Transport device
5 X-ray source
6 X-ray source
7 Sensor unit
8 Sensor unit
9 X-ray beam
10 X-ray beam
11 First part/side
12 Second part/side
13 Beam shielding unit
14 Beam shielding unit
15 Collimator
16 Collimator
17 X-ray source unit
18 Collimator unit
19 Frame structure
20 Sensor array
21 Data processing device
22 Display
- T: Transport direction
- P: Direction perpendicular to the transport direction T
- V: Vertical direction perpendicular to both the transport direction T and the direction P
- Q: Point of intersection of X-ray beams

## Claims

1. A device (1) adapted for examining and detecting foreign objects (3) in a flat plate-shaped material (2), such as a flat fiber-based material, e.g. a mineral-, glass-, wood- or cotton-wool based material or a flat non-fiber-based material, e.g. composite wood, mastic, gypsum board, foam-based materials and plastic-based materials, the device comprising:
a transport device (4) adapted for transporting a flat plate-shaped material to be examined through the device in a transport direction (T),
a first X-ray source (5) adapted for, in operation, emitting a first X-ray beam (9), and a second X-ray source (6) adapted for, in operation, emitting a second X-ray beam (10), the first X-ray source and the second X-ray source being arranged on a first side (11) of the transport device,
a first sensor unit (7) arranged to detect the first X-ray beam (9) and a second sensor unit (8) arranged to detect the second X-ray beam (10), the first sensor unit and the second sensor unit being arranged on a second side (12) of the transport device opposite to the first side of the transport device seen in a vertical direction (V), wherein
the first X-ray source (5) and the second X-ray source (6) are arranged spaced apart in the transport direction and are arranged such that the direction of propagation of the first X-ray beam and the direction of propagation of the second X-ray beam are tilted towards each other forming an angle (β) of at least 5 degrees with one another, wherein
the first sensor unit (7) is adapted for detecting first data, and the second sensor unit (8) is adapted for detecting second data, each of the first data and the second data being indicative of the presence of a foreign object in a flat plate-shaped material and of an indirect or a direct position in the transport direction (T) of a foreign object in the flat plate-shaped material, and wherein
the device further comprises a data processing unit (21) adapted for:
receiving detected first data and second data from the first sensor unit and the second sensor unit,
processing the received first data and second data to determine the presence of a foreign object in the flat plate-shaped material, and
if presence of a foreign object in the flat plate-shaped material is determined, processing the received first data and second data to provide at least a measure of the vertical position of the foreign object in the flat plate-shaped material and a measure of the horizontal position of the foreign object in the flat plate-shaped material.

2. A device according to claim 1, wherein the angle (β) is adjustable.

3. A device according to any one of the above claims, wherein processing the received first data and second data to provide a measure of the vertical position of the foreign object in the flat plate-shaped material comprises providing the vertical position of a reference parameter for the foreign object, the reference parameter being chosen from the group comprising at least the center of mass of the foreign object, the center of geometry of the foreign object, an upper surface of the foreign object, a lower surface of the foreign object and a minimum distance between the foreign object and the outer surfaces of the flat plate-shaped material.

4. A device according to any one of the above claims, wherein the device is adapted for allowing the direction of propagation of the first X-ray beam (9) and the direction of propagation of the second X-ray beam (10) to be displaced backwards and forwards in the transport direction.

5. A device according to any one of the above claims, wherein the first sensor unit (7) and the second sensor unit (8) is a digital sensor unit, such as a CCD sensor unit or a MOS sensor unit or a CMOS sensor unit, and/or wherein
the first sensor unit (7) and the second sensor unit (8) are adapted for providing measurements with any one or more of a detection integration and measurement period in the millisecond range, and a measurement resolution equal to or higher than RP x RT, where RP is the pixel resolution of the detector and RT is determined substantially by the measurement time and the production speed of the flat plate shaped material, particularly where RP and RT is in the range of tenth of mm to several mm.

6. A device according to any one of the above claims, wherein
the first sensor unit (7) and the second sensor unit (8) are further adapted for detecting first data and second data indicative of at least one of a weight, such as a grammage or basis weight, of a flat plate-shaped material and a homogeneity of the flat plate-shaped material, and wherein
the data processing unit (21) is furthermore adapted for processing the detected first data and second data to provide a measure of the weight, such as a grammage or basis weight, of the flat plate-shaped material and/or the homogeneity of the flat plate-shaped material.

7. A device according to any one of the above claims, wherein the device (1) is adapted for integration into a production line.

8. A device according to any one of the above claims, wherein the data processing unit (21) is furthermore adapted for issuing a signal indicating one or more of:
- the presence of a foreign object in the flat plate-shaped material,
- the horizontal position of the foreign object in the flat plate-shaped material,
- the vertical position of the foreign object in the flat plate-shaped material,
- the center of mass of the foreign object in the flat plate-shaped material,
- the edges of the foreign object in the flat plate-shaped material,
- the weight, such as the grammage or basis weight, of the flat plate-shaped material, and
- the homogeneity of the flat plate-shaped material,
and wherein the data processing unit (21) is further adapted for providing said signal to any one or more of a display (22), an emergency stop, a device for marking the foreign object on the flat plate-shaped material. and a device for removing the foreign object.

9. A device according to any one of the above claims, wherein the device comprises an array of sensor units arranged on a line extending in a direction extending in an angle of between 45 and 90 degrees to the transport direction (T), and
wherein the first X-ray source and the second X-ray source are displaceable in the direction (P) extending in an angle of between 45 and 90 degrees to the transport direction (T), or the device comprises an array of X-ray sources arranged extending in a direction extending in an angle of between 45 and 90 degrees to the transport direction (T) and mutually displaced in the transport direction (T).

10. A device according to any one of the above claims, and further comprising a collimator (15, 16) for collimating the first X-ray beam and the second X-ray beam.

11. A method for examining and detecting foreign objects in a flat plate-shaped material, such as a flat fiber-based material, e.g. a mineral-, glass-, wood- or cotton-wool based material or a flat non-fiber-based material, e.g. composite wood, mastic, gypsum board, foam-based materials and plastic-based materials, the method comprising the steps of:
providing a device according to any one of the above claims,
using the first sensor unit, detecting first data indicative of the presence of a foreign object in a flat plate-shaped material and of an indirect or a direct position in the transport direction (T) of a foreign object in the flat plate-shaped material,
using the second sensor unit, detecting second data indicative of the presence of a foreign object in a flat plate-shaped material and of an indirect or a direct position in the transport direction (T) of a foreign object in the flat plate-shaped material, and
by means of the data processing unit:
receiving detected first data and second data from the first sensor unit and the second sensor unit,
processing the received first data and second data to determine the presence of a foreign object in the flat plate-shaped material, and
if the presence of a foreign object in the flat plate-shaped material is determined positively, processing the received first data and second data to provide at least a measure of the vertical position of the foreign object in the flat plate-shaped material and a measure of a horizontal position of the foreign object in the flat plate-shaped material.

12. A method according to claim 11, wherein the step of processing the received first data and second data to provide a measure of the vertical position of the foreign object in the flat plate-shaped material comprises providing the vertical position of a reference parameter for the foreign object, the reference parameter being chosen from the group comprising at least the center of mass of the foreign object, the center of geometry of the foreign object, an upper surface of the foreign object a lower surface of the foreign object and a minimum distance between the foreign object and the outer surfaces of the flat plate-shaped material.

13. A method according to claim 11 and 12, and further comprising the steps of:
using the first sensor unit detecting first data, and using the second sensor unit detecting second data, indicative of at least one of a weight, such as a grammage or basis weight, of a flat plate-shaped material and a homogeneity of the flat plate-shaped material, and
using the data processing unit, processing the detected first data and second data to provide a measure of the weight, such as a grammage or basis weight, of the flat plate-shaped material and/or the homogeneity of the flat plate-shaped material.

14. A method according to any one of claims 11 to 13, wherein the received first data and second data represents a first measurement plane and a second measurement plane, respectively, and wherein the steps of processing the received first data and second data to determine the presence of a foreign object in the flat plate-shaped material and of processing the received first data and second data to provide a measure of the vertical position of the foreign object in the flat plate-shaped material comprises:
analyzing the received first data and the second data, respectively, to identify first and second measurement data, respectively, indicating a radiation intensity below a pre-determined threshold,
determining such identified first and second measurement data, respectively, as indicating the presence of a foreign object in the flat plate-shaped material,
pairing such identified first and second measurement data, respectively, overlapping in a horizontal direction within a maximal distance between the first data and the second data in the transport direction (T),
projecting the paired measurement data in a direction of the first measurement plane and the second measurement plane, respectively, such as to provide a 3D-representation of the foreign object,
determining the center of mass or the center of geometry of the 3D-repesentation of the foreign object, and
determining the vertical position of the foreign object as the vertical position of the determined center of mass or center of geometry.

15. A method according to any one of claims 11 to 13, wherein the received first data and second data represents a first measurement plane and a second measurement plane, respectively, and wherein the steps of processing the received first data and second data to determine the presence of a foreign object in the flat plate-shaped material and of processing the received first data and second data to provide a measure of the vertical position of the foreign object in the flat plate-shaped material comprises:
analyzing the received first data and the second data, respectively, to identify first and second measurement data, respectively, indicating a radiation intensity exceeding pre-defined threshold values,
determining such identified first and second measurement data, respectively, as indicating the presence of a foreign object in the flat plate-shaped material,
pairing such identified first and second measurement data, respectively, overlapping in a horizontal direction within a maximal distance between the first data and the second data in the transport direction (T),
determining the center of mass or the center of geometry of the two two-dimensional detected areas of a foreign object detected within first and second measurement data, and
determining the distance between the two centers of mass or centers of geometry determined from the first and second measurement data, in the transport direction (T), and
determining the vertical position of the foreign object as the vertical position of the determined center of mass or center of geometry, corresponding to the determined distance in the transport direction (T) between said centers of mass or geometry and the angle □ between first and second X-ray beam planes.

16. A method according to any one of claims 11 to 15, and further comprising the step of, using the data processing unit, issuing a signal indicating one or more of:
- the presence of a foreign object in the flat plate-shaped material,
- the horizontal position of the foreign object in the flat plate-shaped material,
- the vertical position of the foreign object in the flat plate-shaped material,
- the center of mass of the foreign object in the flat plate-shaped material,
- the edges of the foreign object in the flat plate-shaped material,
- the weight, such as the grammage or basis weight, of the flat plate-shaped material, and
- the homogeneity of the flat plate-shaped material,
and providing said signal to any one or more of a display, a device for marking the foreign object on the flat plate-shaped material and a device for removing the foreign object.
